(19) Europäisches Patentamt
European Patent Office
Office européen des brevets

(11) **EP 3 558 721 B1**

(12) **FASCICULE DE BREVET EUROPEEN**

(45) Date de publication et mention de la délivrance du brevet:
**07.10.2020 Bulletin 2020/41**

(21) Numéro de dépôt: **17828968.2**

(22) Date de dépôt: **19.12.2017**

(51) Int Cl.:
***B60C 13/02*** *(2006.01)*

(86) Numéro de dépôt international:
**PCT/FR2017/053676**

(87) Numéro de publication internationale:
**WO 2018/115702 (28.06.2018 Gazette 2018/26)**

(54) **PNEUMATIQUE RÉSISTANT AUX ATTAQUES CHIMIQUES**

CHEMISCH RESISTENTER REIFEN

TYRE RESISTANT TO CHEMICAL ATTACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2016 FR 1662894**

(43) Date de publication de la demande:
**30.10.2019 Bulletin 2019/44**

(73) Titulaire: **Compagnie Générale des Etablissements Michelin**
**63000 Clermont-Ferrand (FR)**

(72) Inventeurs:
• **MERINO LOPEZ, José**
**63040 Clermont Ferrand Cedex 9 (FR)**
• **WIEL, Pierre**
**63040 Clermont Ferrand Cedex 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
WO-A1-2015/019995    JP-A- H0 986 108
JP-A- S63 170 110    JP-A- 2006 213 128
JP-A- 2007 022 367    JP-A- 2014 151 690
LU-A1- 67 300    US-A- 4 155 393

**Description**

DOMAINE DE L'INVENTION

L'invention se rapporte aux pneumatiques à carcasse radiale ou à carcasse croisée.

ETAT DE LA TECHNIQUE

Les pneumatiques à carcasse radiale se sont progressivement imposés sur différents marchés, et notamment le marché des pneumatiques pour véhicules de tourisme. Ce succès est dû en particulier aux qualités d'endurance, de confort et de faible résistance au roulement de la technologie radiale.

Les principales parties d'un pneumatique sont la bande de roulement, les flancs et les bourrelets. Les bourrelets sont destinés à entrer en contact avec la jante. Dans un pneumatique de technologie radiale, chacune des principales parties constituant le pneumatique, à savoir la bande de roulement, les flancs et les bourrelets, a des fonctions bien séparées les unes des autres, et a par conséquent, une constitution spécifique bien connue.

Le pneumatique radial est essentiellement renforcé par une armature de carcasse comprenant au moins une nappe de carcasse présentant un angle sensiblement égal à 90° par rapport à la direction circonférentielle du pneumatique. Cette armature de carcasse est surmontée radialement à l'extérieur, et sous la bande de roulement, de nappes de renfort formant une ceinture.

Le pneumatique à carcasse croisée se distingue d'un pneumatique de technologie radial par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

On rappelle que, selon l'invention, la direction circonférentielle du pneumatique est la direction comprise dans un plan perpendiculaire à l'axe de rotation du pneumatique et tangente au renforcement de ceinture du pneumatique.

Suite à l'apparition de pneumatique à carcasse radiale, certains pneumatiques à carcasse croisée ont également été pourvus d'un renforcement de ceinture sous la bande de roulement.

Dans ces deux types de pneumatique, la bande de roulement, en contact directement avec le sol, a notamment pour fonction d'assurer le contact avec la route et doit s'adapter à la forme du sol. Les flancs, quant à eux, absorbent les irrégularités du sol tout en transmettant les efforts mécaniques nécessaires pour porter la charge du véhicule et assurer son mouvement.

Le renforcement de ceinture est une armature qui doit, d'une part, être suffisamment rigide vis-à-vis des déformations sur chant afin que le pneumatique développe les poussées de dérive nécessaires à son guidage, et transmettre le couple moteur ou freineur, et d'autre part, être très souple en flexion, c'est-à-dire autoriser des variations de courbure de son plan pour assurer une surface de contact du pneumatique sur le sol suffisante.

Par conséquent, le renforcement de ceinture a généralement une structure composite, lui permettant de présenter la rigidité requise pour un poids relativement faible. Le renforcement de ceinture est généralement constitué d'au moins deux nappes présentant des angles différents, comprenant des renforts, en forme de câble, enrobés de caoutchouc. Les éléments de renfort sont croisés d'une nappe à l'autre par rapport à la direction circonférentielle.

D'autres solutions de renforcement de pneumatique ont été présentées dans les documents JP H09 86108, JP 2006 213128, WO 2015/019996 et LU 67 300.

Un pneumatique est soumis à différents types d'attaques sur sa surface, en particulier des attaques physiques qui viennent de chocs, par exemple pour les flancs du pneumatique des chocs sur les trottoirs ou dans des nids de poule.

Il existe toutefois d'autres d'attaques de type chimique cette fois, comme par exemple par l'action de l'ozone sur le pneumatique.

L'action de l'ozone sur le pneumatique vient en effet favoriser l'apparition de fissures en surface. Ces fissures sont un signe de vieillissement et de manque de robustesse du pneumatique et elles sont source d'inquiétude pour le client utilisateur.

Il existe un besoin de disposer d'un pneu robuste, en particulier sur le flanc, résistant à l'attaque ozone pendant la durée de vie du pneu en service.

Pour réduire l'effet de ces attaques d'ordre chimique, il existe des solutions consistant à protéger chimiquement le matériau constitutif du pneumatique. Par exemple, il a été proposé d'utiliser des cires dans le mélange, ces cires venant migrer vers la surface du pneu et créant une couche protectrice. Une autre solution consiste à utiliser des antioxydants dans le mélange, tels que du 6PPD. Toutefois, des craquelures apparaissent malgré la mise en place de ces protections. En outre l'utilisation des cires peut provoquer une coloration plus claire du flanc, pouvant provoquer des tâches si la coloration est hétérogène, ce qui n'est pas souhaité pour l'aspect visuel du pneumatique.

Un but de la présente invention est donc de proposer un pneumatique présentant une résistance accrue face aux attaques chimiques de surface, notamment au niveau des flancs, et ne présentant pas les inconvénients de l'art antérieur.

En particulier, un but de la présente invention est de proposer un pneumatique résistant aux attaques chimiques, notamment à l'ozone, au niveau des flancs dudit pneumatique, sans nécessiter de modification de la composition du matériau formant le pneumatique.

EXPOSE DE L'INVENTION

A cette fin, on propose un pneumatique pour ensemble roulant comprenant une jante et un pneumatique, ledit pneumatique comportant au moins une armature de carcasse surmontée radialement à l'extérieur d'une armature de sommet, elle-même radialement à l'intérieur d'une bande de roulement ayant deux extrémités axialement les plus extérieures, ladite armature de sommet étant constituée d'au moins une couche d'éléments de renforcement, ladite bande de roulement étant reliée à deux bourrelets par l'intermédiaire de deux flancs, lesdits bourrelets étant destinés à entrer en contact avec une jante ayant des hauts de crochet de jante, chaque bourrelet comportant au moins un élément de renforcement circonférentiel, dans lequel chaque flanc comprend au moins un ensemble d'incisions sensiblement parallèles et espacées d'un pas (Ps) ayant une valeur strictement inférieure à 5 mm, chaque incision étant formée dans le flanc avec une profondeur (H) et une largeur (e), la profondeur (H) ayant une valeur comprise entre un quart de la valeur dudit pas (Ps) et la valeur dudit pas (Ps), et la largeur (e) ayant une valeur strictement inférieure à un quart dudit pas (Ps).

Des aspects préférés mais non limitatifs de ce pneumatique, pris seuls ou en combinaison, sont les suivants :

- chaque incision a une profondeur (H) ayant une valeur comprise entre un tiers de la valeur dudit pas (Ps) et sept dixième de la valeur dudit pas (Ps).
- le pas (Ps) a une valeur strictement inférieure à 3.5 mm.
- chaque incision a une largeur (e) ayant une valeur strictement inférieure à un dixième dudit pas (Ps), de préférence strictement inférieure à un dixième du quart dudit pas (Ps).
- chaque incision a une largeur (e) ayant une valeur strictement inférieure à 0.45 mm.
- chaque incision a une largeur (e) ayant une valeur inférieure ou égale à 0.3 mm, et de préférence inférieure ou égale à 0.2 mm.
- chaque incision a une section transversale présentant une portion droite de largeur (e) et s'étendant à partir de la surface dudit flanc, et une portion circulaire s'étendant à partir de la portion droite, ladite portion circulaire ayant un rayon (r) ayant une valeur strictement supérieure au deux tiers de la valeur de la largeur (e).
- les incisions sont agencées sur la totalité de la surface du flanc.
- les incisions sont agencées dans une zone du flanc comprise au moins entre un point A et un point C, et de préférence uniquement dans cette zone, où :

  ◦ Le point A est positionné à la jonction entre le flanc et la bande de roulement ;
  ◦ Le point C est positionné au niveau du flanc où la distance entre les deux flancs du pneumatique est la plus grande lorsque le pneumatique est gonflé.

- chaque incision s'étend globalement selon une direction longitudinale ($D_L$).
- les incisions sont formées sur le flanc selon une direction longitudinale ($D_L$) de manière à former avec la direction circonférentielle ($D_C$) du pneumatique un angle α compris entre 0° et 60°, de préférence un angle α égal à 45°.
- chaque flanc comprend un deuxième ensemble d'incisions où les incisions du deuxième ensemble forment un angle β avec les incisions de l'ensemble, l'angle β étant compris entre 70° et 120°, de préférence entre 80° et 110°, et de préférence encore égal à 90°.
- les incisions du deuxième ensemble ont une forme et/ou un agencement relatif identiques à ceux des incisions de l'ensemble.
- le flanc comprend au moins une portion en saillie par rapport à la surface dudit flanc, le flanc comprenant au moins une incision complémentaire venant délimiter ladite portion en saillie.
- l'incision complémentaire est formée au niveau de l'arête entre la portion en saillie et la surface du flanc.
- l'incision complémentaire a une forme identique à celle des incisions de l'ensemble.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 représente de manière schématique la coupe d'un pneumatique selon un plan radial ;
- la figure 2 représente une vue en coupe du flanc d'un pneumatique dans lequel sont formées des incisions selon un premier mode de réalisation de l'invention ;
- la figure 3 représente une vue en coupe du flanc d'un pneumatique dans lequel sont formées des incisions selon un deuxième mode de réalisation de l'invention ;
- la figure 4 représente de manière schématique une vue de côté d'un flanc de pneumatique avec un agencement d'incisions selon un premier mode de réalisation ;
- la figure 5 représente de manière schématique une vue de côté d'un flanc de pneumatique avec un agencement d'incisions selon un deuxième mode de réalisation ;
- la figure 6 représente de manière schématique une vue de côté d'un flanc de pneumatique avec un agencement d'incisions selon un troisième mode de réalisation ;
- la figure 7 représente une vue de côté d'un flanc de pneumatique avec des incisions formées autour du marquage dudit flanc de pneumatique ;
- la figure 8 est un graphe mettant en avant la résistance à l'ozone des pneumatiques selon l'invention par rapport à des pneumatiques standards.

DESCRIPTION DETAILLEE DE L'INVENTION

Dans ce document, on entend par « surface de roulement » l'ensemble des points de la bande de roulement d'un pneumatique qui sont susceptibles d'entrer en contact avec le sol lorsque le pneumatique roule.

Dans l'emploi du terme « radial » il convient de distinguer plusieurs utilisations différentes du mot par la personne du métier.

Premièrement, l'expression se réfère à un rayon du pneumatique. Une « direction radiale » est une direction coupant l'axe de rotation du pneumatique et perpendiculaire à celui-ci. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également. Par ailleurs, on qualifie de rayon Rx d'un point X du pneumatique la distance radiale entre l'axe de rotation dudit pneumatique et le point X.

En revanche, un fil ou une armature est dit « radial » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique. Un « plan radial ou méridien » est un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8.

Le « plan médian ou plan équatorial » du pneumatique est le plan qui est perpendiculaire à l'axe de rotation du pneumatique et qui se situe à équidistance des structures annulaires de renforcement de chaque bourrelet. Ce plan divise le pneumatique en deux moitiés sensiblement égales, c'est-à-dire qui passe par le milieu de la bande de roulement.

Une « direction circonférentielle » est une direction qui est perpendiculaire à la fois à un rayon du pneumatique et à la direction axiale. Cela correspond à la direction de roulement du pneumatique.

Une « coupe circonférentielle » ou « section circonférentielle » est respectivement une coupe ou une section selon un plan perpendiculaire à l'axe de rotation du pneumatique. Un « plan circonférentiel » est un plan perpendiculaire à l'axe de rotation du pneumatique.

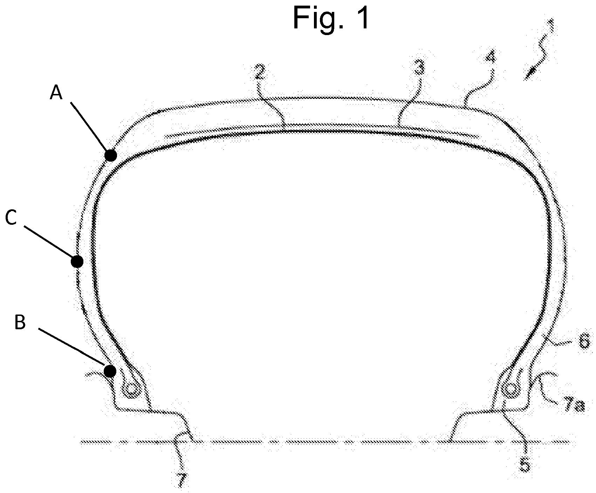

A la figure 1 est représentée la coupe d'un pneumatique 1 selon un plan radial.

De manière classique, le pneumatique 1 comprend au moins une armature de carcasse 2 surmontée radialement à l'extérieur d'une armature de sommet 3, elle-même radialement à l'intérieur d'une bande de roulement 4 ayant deux extrémités axialement les plus extérieures.

L'armature de sommet 3 est constituée d'au moins une couche d'éléments de renforcement, et généralement de plusieurs couches de renforcement.

La bande de roulement 4 est reliée à deux bourrelets 5 par l'intermédiaire de deux flancs 6.

Les bourrelets 5 sont destinés à entrer en contact avec une jante 7 ayant des hauts de crochet de jante 7a. Chaque bourrelet 5 comprend de préférence au moins un élément de renforcement circonférentiel.

Il a été constaté que les contraintes de surface existant au niveau des flancs 6 du pneumatique favorisent les cassures ou dégradations en général dudit flanc provoquées par des attaques chimiques. L'ozone en particulier agit au niveau de ces zones contraintes du flanc 6 et vient non seulement favoriser l'apparition de cassures dans à la surface du matériau formant le flanc 6 mais également la propagation de ces cassures.

Il est proposé ici de former des découpes à la surface du flanc 6 de sorte à former des incisions destinées à diminuer les contraintes mécaniques dans la zone du flanc, ce qui va limiter l'action néfaste de l'ozone.

Plus précisément, on propose de former des incisions qui sont denses et peu profondes.

Ainsi, au moins un des deux flancs 6 du pneumatique 1, et de préférence les deux flancs 6 du pneumatique 1, comprend au moins un ensemble 10 d'incisions 11 sensiblement parallèles, où deux incisions adjacentes sont espacées d'un pas Ps.

De préférence, le pas Ps séparant les incisions 11 de l'ensemble 10 d'incisions est constant.

Il est toutefois possible que le pas Ps entre deux incisions 11 adjacentes soit variable sur l'ensemble 10 d'incisions. Il est par exemple possible que l'ensemble 10 d'incisions comprenne plusieurs sous-ensembles d'incisions avec des pas Ps différents, le pas Ps étant toutefois constant au sein du sous-ensemble considéré.

Une incision 11 donnée est définie par rapport au pas Ps la séparant de l'incision adjacente.

Comme indiqué plus haut, les incisions 11 sont relativement denses sur le flanc, et le pas Ps a donc de préférence une valeur strictement inférieure à 5 mm. De préférence encore, le pas Ps des incisions 11 a une valeur strictement inférieure à 3.5 mm.

De préférence, chaque incision 11 de l'ensemble 10 d'incisions s'étend globalement selon une direction longitudinale $D_L$. Une incision 11 peut en outre avoir une forme sensiblement longitudinale, l'incision s'étendant par exemple selon une ligne droite ou courbe.

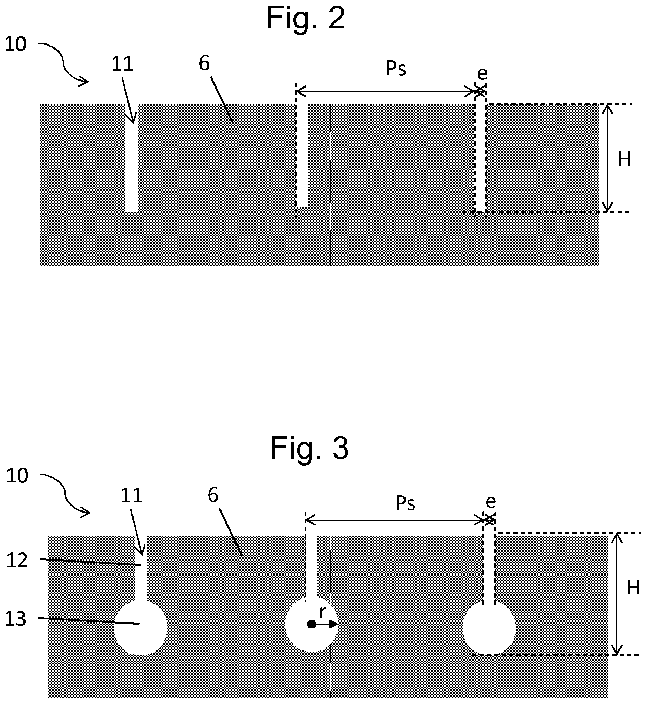

Chaque incision 11 formée dans le flanc 6 peut se caractériser par une profondeur H et une largeur e comme illustré aux figures 2 et 3.

La profondeur H choisie pour l'incision dépend du pas Ps prévu entre deux incisions 11 de l'ensemble 10.

Les incisions 11 sont ainsi de préférence formées avec une hauteur H ayant une valeur comprise entre un quart de la valeur dudit pas Ps et la valeur dudit pas Ps, soit :

$$\frac{1}{4}Ps < H < Ps$$

De préférence encore, chaque incision 11 a une profondeur (H) ayant une valeur comprise entre un tiers de la valeur dudit pas (P) et sept dixième de la valeur dudit pas Ps, soit :

$$\frac{1}{3}Ps < H < 0.7Ps$$

La largeur e de l'incision 11 est aussi de préférence choisie en fonction du pas Ps de l'ensemble 10 des incisions 11.

De préférence, la largeur e a une valeur strictement inférieure à un dixième dudit pas Ps, soit :

$$e < 0.1Ps$$

Selon un mode de réalisation préféré, chaque incision 11 a une largeur e ayant une valeur strictement inférieure à 0.45 mm.

Selon un autre mode de réalisation, chaque incision 11 a une largeur e ayant une valeur inférieure ou égale à 0.3 mm, et de préférence inférieure ou égale à 0.2 mm.

La forme des incisions 11 peut être plus ou moins complexe, elle est généralement choisie pour réduire le plus fortement possible les contraintes au niveau du flanc 6 et dépend également des dimensions envisagées de ladite incision 11, et réciproquement.

Selon l'exemple présenté à la figure 2, chaque incision 11 a une forme de découpe simple, allongée, c'est-à-dire que l'incision 11 a une section transversale présentant une unique portion droite.

Sur l'exemple de la figure 2, la portion droite présente une extrémité à angles droits, mais on pourrait envisager de faire une incision 11 avec une portion droite ayant une extrémité arrondie, cela permettant une meilleure absorption des contraintes de roulage.

De préférence encore, pour minimiser les contraintes de roulage au niveau du fond des incisions 11, on prévoit des incisions avec un profil tel qu'illustré à la figure 3.

Sur cet exemple, chaque incision 11 a une section transversale présentant une première portion droite 12 de largeur e et s'étendant à partir de la surface dudit flanc 6. Cette première portion droite 12 se prolonge vers le fond de l'incision par une deuxième portion 13, sensiblement circulaire.

La portion circulaire 13 de l'incision 11 de la figure 3 a de préférence un rayon r ayant une valeur strictement supérieure à la moitié de la valeur de la largeur e $(r > \frac{1}{2}e)$, et de préférence une valeur strictement supérieure au deux tiers de la valeur de la largeur e $(r > \frac{2}{3}e)$.

Le rayon r de cette deuxième portion circulaire 13 a de préférence une valeur supérieure ou égale à 0.3 mm.

La présente d'une portion circulaire, ou plus généralement d'une deuxième portion comprenant un arrondi, avec un diamètre plus important que la largeur de la partie droite, sous forme de fente, est particulièrement avantageuse pour assurer l'endurance du pneumatique.

Les incisions 11 peuvent être agencées sur la totalité de la surface du flanc 6, c'est-à-dire entre un point A et un point B, où :

- Le point A est positionné à la jonction entre le flanc 6 et la bande de roulement 4 ; le point A est de préférence à une extrémité axialement la plus extérieure de la bande de roulement 4.
- Le point B est positionné au niveau du bord du crochet de jante 7a.

Toutefois, comme illustré à la figure 1, ces incisions 11 sont de préférence formées sur une portion réduite du flanc 6, en particulier dans une zone du flanc 6 comprise entre le point A et un point C, où le point C est positionné au niveau du flanc 6 où la distance entre les deux flancs 6 du pneumatique est la plus grande lorsque le pneumatique est gonflé. Le point C correspond à la zone du flanc communément appelée « équateur ».

Les incisions peuvent être formées dans une zone du flanc 6 comprise au moins entre le point A et le point C, c'est-à-dire qu'elles peuvent s'étendre au-delà du point C, en direction du point B positionné au niveau du bord du crochet de jante 7a.

Les incisions 11 de l'ensemble 10 peuvent avoir diverses orientations sur le flanc 6.

De préférence, les incisions 11 s'étendant globalement selon une direction longitudinale $D_L$ sont formées sur le flanc 6 de sorte que leur axe longitudinal $D_L$ forme avec la direction circonférentielle $D_C$ du pneumatique 1 avec un angle $\alpha$ compris entre 0° et 60°.

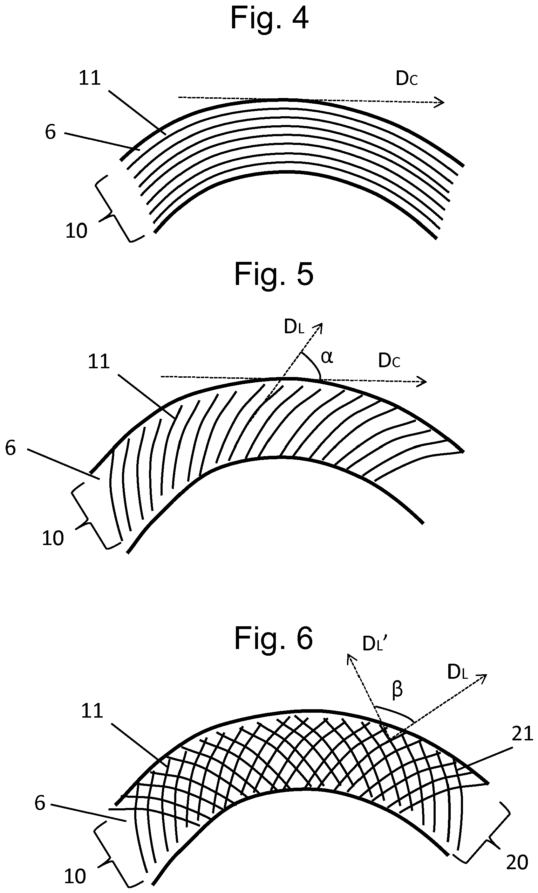

Sur l'exemple de la figure 4, les incisions 11 sont formées selon la direction circonférentielle $D_C$ du pneumatique 1, c'est-à-dire que l'angle $\alpha$ est égal à 0°. On dit dans ce cas que les incisions 11 sont des incisions circonférentielles.

Selon un autre exemple illustré à la figure 5, les incisions 11 forment avec la direction circonférentielle $D_C$ du pneumatique 1 un angle $\alpha$ sensiblement égal à 45°.

Dans la description qui précède, il est fait référence à un flanc 6 ayant un seul ensemble 10 d'incisions 11. Il est toutefois possible d'avoir un flanc 6 comprenant plusieurs ensembles d'incisions sensiblement parallèles.

Il est entendu ici que les enseignements présentés dans ce document en référence au premier ensemble 10 d'incisions 11 sont applicables de la même manière aux éventuels autres ensembles d'incisions longitudinales prévus dans le flanc 6 du pneumatique 1.

Ainsi, selon l'exemple illustré à la figure 6, le flanc 6 comprend un deuxième ensemble 20 d'incisions 21 venant en complément du premier ensemble 10 d'incisions 11.

De préférence, les incisions 21 du deuxième ensemble 20 s'étendent également globalement selon une direction longitudinale $D_L$' et forment un angle $\beta$ non nul avec la direction longitudinale $D_L$ des incisions 11 du premier ensemble 10.

L'angle $\beta$ est par exemple compris entre 70° et 120°, de préférence entre 80° et 110°, et de préférence encore de l'ordre de 90°.

Les pneumatiques ont un général un certain nombre de marquages sur les flancs, notamment des marquages venant en saillie par rapport à la surface externe du flanc de pneumatique. Ces marquages peuvent par exemple concerner la marque du pneumatique, le logotype, la dimension, etc.

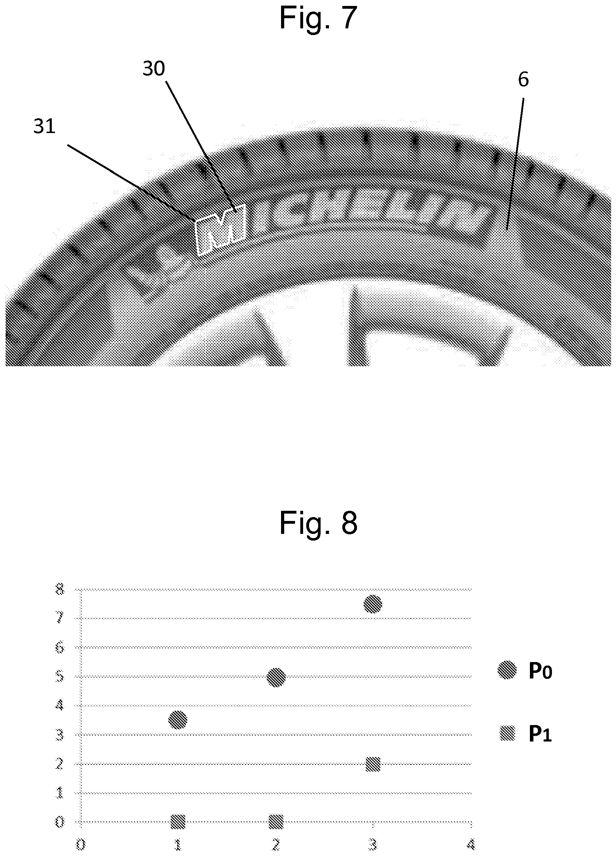

Selon un exemple illustré à la figure 7, le flanc 6 du pneumatique 1 comprend au moins une incision complémentaire 31 venant délimiter une portion en saillie 30 formant le marquage. Plus précisément, sur l'exemple de la figure 7, l'incision vient entourer la lettre « M » faisant partie du marquage en relief de la marque MICHELIN®.

Cette incision complémentaire 31 est de préférence formée au niveau de l'arête entre la portion en saillie 30 et la surface du flanc 6, c'est-à-dire dans la portion en coin concave entre la surface du flanc 6 et le marquage.

Cette l'incision complémentaire 31 a de préférence une forme identique à celle des incisions 11 de l'ensemble 10, ce qui vient permettre de protéger le pneu contre les attaques chimique de type ozone.

Les différentes incisions prévues dans les flancs 6 et décrites précédemment peuvent être formées par un processus de découpe, notamment une découpe sans enlèvement de matière.

La figure 8 est un graphe mettant en avant des tests comparatifs d'usure à l'ozone entre un pneu standard P0 et un pneu P1 ayant des flancs sur lesquels des incisions ont été formées.

Le pneu P0 est un pneu de référence, standard, c'est-à-dire que les flancs ne comprennent aucune incision ou découpe.

Le pneu P1 est identique au pneu P0 mais comprend en plus des incisions formées sur le flanc 6, agencées dans une configuration circonférentielle comme celle illustrée à la figure 4. Chaque incision a un profil simple selon le modèle illustré à la figure 2, avec une hauteur H de 2 mm et une épaisseur e nulle (e = 0 mm). Les incisions sont formées par découpe sans enlèvement de matière. Les incisions sont denses, formées avec un pas Ps de 2 mm.

Pour le test comparatif, les pneus P0 et P1 ont suivi chacun 3 cycles d'exposition à l'ozone d'une semaine.

Le graphe de la figure 8 illustre le niveau d'attaque à l'ozone sur une échelle allant de 0 correspondant à une absence de fissures à 10 correspondant à une présence de grandes fissures (de taille de l'ordre du cm) denses.

Les résultats montrent un gain significatif de résistance à l'attaque ozone pour le pneu P1 par rapport au pneu de référence P0.

Il est en particulier à noter qu'il n'y eu absolument aucune fissure pendant les deux premières semaines d'exposition à l'ozone pour le pneu P1, tandis que le pneu de référence P0 était très fissuré, et ce dès la première semaine.

## Revendications

1. Pneumatique pour ensemble roulant comprenant une jante et un pneumatique, ledit pneumatique comportant au moins une armature de carcasse (2) surmontée radialement à l'extérieur d'une armature de sommet (3), elle-même radialement à l'intérieur d'une bande de roulement (4) ayant deux extrémités axialement les plus extérieures, ladite armature de sommet (3) étant constituée d'au moins une couche d'éléments de renforcement, ladite bande de roulement (4) étant reliée à deux bourrelets (5) par l'intermédiaire de deux flancs (6), lesdits bourrelets (5) étant destinés à entrer en contact avec une jante (7) ayant des hauts de crochet de jante (7a), chaque bourrelet (5) comportant au moins un élément de renforcement circonférentiel,

   **caractérisé en ce que** chaque flanc (6) comprend au moins un ensemble (10) d'incisions (11) sensiblement parallèles et espacées d'un pas (Ps) ayant une valeur strictement inférieure à 5 mm, chaque incision (11) étant formée dans le flanc (6) avec une profondeur (H) et une largeur (e), la profondeur (H) ayant une valeur comprise entre un quart de la valeur dudit pas (Ps) et la valeur dudit pas (Ps), et la largeur (e) ayant une valeur strictement inférieure à un dixième du quart dudit pas (Ps).

2. Pneumatique selon la revendication 1, dans lequel chaque incision (11) a une profondeur (H) ayant une valeur comprise entre un tiers de la valeur dudit pas (Ps) et sept dixième de la valeur dudit pas (Ps).

3. Pneumatique selon l'une quelconque des revendications 1 ou 2, dans lequel le pas (Ps) a une valeur strictement inférieure à 3.5 mm.

4. Pneumatique selon l'une quelconque des revendications 1 à 3, dans lequel chaque incision (11) a une largeur (e) ayant une valeur strictement inférieure à 0.45 mm.

5. Pneumatique selon l'une quelconque des revendications 1 à 3, dans lequel chaque incision (11) a une largeur (e) ayant une valeur inférieure ou égale à 0.3 mm, et de préférence inférieure ou égale à 0.2 mm.

6. Pneumatique selon l'une quelconque des revendications 1 à 5, dans lequel chaque incision (11) a une section transversale présentant une portion droite (12) de largeur (e) et s'étendant à partir de la surface dudit flanc (6), et une portion circulaire (13) s'étendant à partir de la portion droite (12), ladite portion circulaire (13) ayant un rayon (r) ayant une valeur strictement supérieure au deux tiers de la valeur de la largeur (e).

7. Pneumatique selon l'une quelconque des revendications 1 à 5, dans lequel les incisions (11) sont agencées sur la totalité de la surface du flanc (6).

8. Pneumatique selon l'une quelconque des revendications 1 à 5, dans lequel les incisions (11) sont agencées dans une zone du flanc (6) comprise au moins entre un point A et un point C, où :

   - Le point A est positionné à la jonction entre le flanc (6) et la bande de roulement (4) ;
   - Le point C est positionné au niveau du flanc (6) où la distance entre les deux flancs (6) du pneumatique est la plus grande lorsque le pneumatique est gonflé.

9. Pneumatique selon l'une quelconque des revendications 1 à 8, dans lequel chaque incision (11) s'étend globalement selon une direction longitudinale (DL).

10. Pneumatique selon l'une quelconque des revendications 1 à 8, dans lequel les incisions (11) sont formées sur le flanc (6) selon une direction longitudinale (DL) de manière à former avec la direction circonférentielle (DC) du pneumatique un angle α compris entre 0° et 60°, de préférence un angle α égal à 45°.

11. Pneumatique selon l'une quelconque des revendications 1 à 10, dans lequel chaque flanc (6) comprend un deuxième ensemble (20) d'incisions (21) où les incisions (21) du deuxième ensemble (20) forment un angle β avec les incisions (11) de l'ensemble (10), l'angle β étant compris entre 70° et 120°, de préférence entre 80° et 110°, et de préférence encore égal à 90°.

12. Pneumatique selon la revendication 11, dans lequel les incisions (21) du deuxième ensemble (20) ont une forme et/ou un agencement relatif identiques à ceux des incisions (11) de l'ensemble (10).

13. Pneumatique selon l'une quelconque des revendications 1 à 12, dans lequel le flanc (6) comprend au moins une portion en saillie (30) par rapport à la surface dudit flanc (6), le flanc (6) comprenant au moins une incision complémentaire (31) venant délimiter ladite portion en saillie (30).

14. Pneumatique selon la revendication 13, dans lequel l'incision complémentaire (31) est formée au niveau de l'arête entre la portion en saillie (30) et la surface du flanc (6).

15. Pneumatique selon l'une quelconque des revendications 13 ou 14, dans lequel l'incision complémentaire (31) a une forme identique à celle des incisions (11) de l'ensemble (10).

**Patentansprüche**

1. Luftreifen für eine fahrende Einheit, die eine Felge und einen Luftreifen enthält, wobei der Luftreifen mindestens eine Karkassenbewehrung (2) aufweist, die radial außen von einer Scheitelbewehrung (3) überlagert wird, die selbst radial innerhalb eines Laufstreifens (4) liegt, der zwei axial am weitesten außen liegende Enden hat, wobei die Scheitelbewehrung (3) aus mindestens einer Schicht von Verstärkungselementen besteht, wobei der Laufstreifen (4) über zwei Flanken (6) mit zwei Wülsten (5) verbunden ist, wobei die Wülste (5) dazu bestimmt sind, mit einer Felge (7) in Kontakt zu kommen, die Felgenhaken-Oberkanten (7a) hat, wobei jeder Wulst (5) mindestens ein Umfangsverstärkungselement aufweist, **dadurch gekennzeichnet, dass** jede Flanke (6) mindestens eine Einheit (10) von Einschnitten (11) enthält, die im Wesentlichen parallel und durch eine Teilung (Ps) mit einem Wert strikt unter 5 mm beabstandet sind, wobei jeder Einschnitt (11) in der Flanke (6) mit einer Tiefe (H) und einer Breite (e) geformt ist, wobei die Tiefe (H) einen Wert zwischen einem Viertel des Werts der Teilung (Ps) und dem Wert der Teilung (Ps) hat, und die Breite (e) einen Wert strikt unter einem Zehntel des Viertels der Teilung (Ps) hat.

2. Luftreifen nach Anspruch 1, wobei jeder Einschnitt (11) eine Tiefe (H) hat, die einen Wert zwischen einem Drittel des Werts der Teilung (Ps) und sieben Zehntel des Werts der Teilung (Ps) hat.

3. Luftreifen nach einem der Ansprüche 1 oder 2, wobei die Teilung (Ps) einen Wert strikt unter 3,5 mm hat.

4. Luftreifen nach einem der Ansprüche 1 bis 3, wobei jeder Einschnitt (11) eine Breite (e) hat, die einen Wert strikt unter 0,45 mm hat.

5. Luftreifen nach einem der Ansprüche 1 bis 3, wobei jeder Einschnitt (11) eine Breite (e) hat, die einen Wert unter oder gleich 0,3 mm, und vorzugsweise unter oder gleich 0,2 mm hat.

6. Luftreifen nach einem der Ansprüche 1 bis 5, wobei jeder Einschnitt (11) einen Querschnitt hat, der einen geraden Abschnitt (12) einer Breite (e) und sich ausgehend von der Fläche der Flanke (6) erstreckend und einen kreisförmigen Abschnitt (13) aufweist, der sich ausgehend vom geraden Abschnitt (12) erstreckt, wobei der kreisförmige Abschnitt (13) einen Radius (r) hat, der einen Wert strikt größer als zwei Drittel des Werts der Breite (e) hat.

7. Luftreifen nach einem der Ansprüche 1 bis 5, wobei die Einschnitte (11) über die Gesamtheit der Fläche der Flanke (6) angeordnet sind.

8. Luftreifen nach einem der Ansprüche 1 bis 5, wobei die Einschnitte (11) in einem Bereich der Flanke (6) angeordnet sind, der zwischen mindestens einem Punkt A und einem Punkt C liegt, wobei:

   - der Punkt A an der Verbindungsstelle zwischen der Flanke (6) und dem Laufstreifen (4) positioniert ist;
   - der Punkt C in dem Bereich der Flanke (6) positioniert ist, in dem der Abstand zwischen den zwei Flanken (6) des Luftreifens am größten ist, wenn der Luftreifen aufgepumpt ist.

9. Luftreifen nach einem der Ansprüche 1 bis 8, wobei jeder Einschnitt (11) sich global in einer Längsrichtung (D$_L$) erstreckt.

10. Luftreifen nach einem der Ansprüche 1 bis 8, wobei die Einschnitte (11) auf der Flanke (6) in einer Längsrichtung (D$_L$) geformt sind, um mit der Umfangsrichtung (D$_C$) des Luftreifens einem Winkel α zwischen 0° und 60°, vorzugsweise einen Winkel α gleich 45° zu bilden.

11. Luftreifen nach einem der Ansprüche 1 bis 10, wobei jede Flanke (6) eine zweite Einheit (20) von Einschnitten (21) enthält, wobei die Einschnitte (21) der zweiten Einheit (20) einen Winkel β mit den Einschnitten (11) der Einheit (10) bilden, wobei der Winkel β zwischen 70° und 120°, vorzugsweise zwischen 80° und 110° liegt und noch bevorzugt gleich 90° ist.

12. Luftreifen nach Anspruch 11, wobei die Einschnitte (21) der zweiten Einheit (20) eine Form und/oder eine relative Anordnung gleich denjenigen der Einschnitte (11) der Einheit (10) haben.

13. Luftreifen nach einem der Ansprüche 1 bis 12, wobei die Flanke (6) mindestens einen bezüglich der Fläche der Flanke (6) vorstehenden Abschnitt (30) enthält, wobei die Flanke (6) mindestens einen komplementären Einschnitt (31) enthält, der den vorstehenden Abschnitt (30) begrenzt.

14. Luftreifen nach Anspruch 13, wobei der komplementäre Einschnitt (31) im Bereich der Kante zwischen dem vorstehenden Abschnitt (30) und der Fläche der Flanke (6) geformt ist.

15. Luftreifen nach einem der Ansprüche 13 oder 14, wobei der komplementäre Einschnitt (31) eine Form gleich derjenigen der Einschnitte (11) der Einheit (10) hat.

**Claims**

1. Tyre for a rolling assembly comprising a rim and a tyre, said tyre having at least one carcass reinforcement (2) surmounted radially on the outside by a crown reinforcement (3), itself radially on the inside of a tread (4) having two axially outermost ends, said crown reinforcement (3) being made up of at least one layer of reinforcing elements, said tread (4) being connected to two beads (5) by way of two sidewalls (6), said beads (5) being intended to come into contact with a rim (7) having rim flange tops (7a), each bead (5) having at least one circumferential reinforcing element,
**characterized in that** each sidewall (6) comprises at least one set (10) of sipes (11) that are substantially parallel and spaced apart at a spacing (Ps) having a value strictly less than 5 mm, each sipe (11) being formed in the sidewall (6) with a depth (H) and a width (e), the depth (H) having a value of between one quarter of the value of said spacing (Ps) and the value of said spacing (Ps), and the width (e) having a value strictly less than one tenth of a quarter of said spacing (Ps).

2. Tyre according to Claim 1, wherein each sipe (11) has a depth (H) having a value of between one third of the value of said spacing (Ps) and seven tenths of the value of said spacing (Ps).

3. Tyre according to either one of Claims 1 and 2, wherein the spacing (Ps) has a value strictly less than 3.5 mm.

4. Tyre according to any one of Claims 1 to 3, wherein each sipe (11) has a width (e) having a value strictly less than 0.45 mm.

5. Tyre according to any one of Claims 1 to 3, wherein each sipe (11) has a width (e) having a value less than or equal to 0.3 mm, preferably less than or equal to 0.2 mm.

6. Tyre according to any one of Claims 1 to 5, wherein each sipe (11) has a cross section having a straight portion (12) of width (e) and extending from the surface of said sidewall (6), and a circular portion (13) extending from the straight portion (12), said circular portion (13) having a radius (r) having a value strictly greater than two thirds of the value of the width (e).

7. Tyre according to any one of Claims 1 to 5, wherein the sipes (11) are arranged over the entire area of the sidewall (6).

8. Tyre according to any one of Claims 1 to 5, wherein the sipes (11) are arranged in a region of the sidewall (6) contained at least between a point A and a point C, where:

    - the point A is positioned at the junction between the sidewall (6) and the tread (4);
    - the point C is positioned on the sidewall (6) where the distance between the two sidewalls (6) of the tyre is greatest when the tyre is inflated.

9. Tyre according to any one of Claims 1 to 8, wherein each sipe (11) extends generally in a longitudinal direction ($D_L$).

10. Tyre according to any one of Claims 1 to 8, wherein the sipes (11) are formed on the sidewall (6) in a longitudinal direction ($D_L$) so as to form an angle $\alpha$ of between 0° and 60°, preferably an angle $\alpha$ equal to 45°, with the circumferential direction (Dc) of the tyre.

11. Tyre according to any one of Claims 1 to 10, wherein each sidewall (6) comprises a second set (20) of sipes (21), wherein the sipes (21) of the second set (20) form an angle $\beta$ with the sipes (11) of the set (10), the angle $\beta$ being between 70° and 120°, preferably between 80° and 110°, and more preferably equal to 90°.

12. Tyre according to Claim 11, wherein the sipes (21) of the second set (20) have a shape and/or relative arrangement identical to those of the sipes (11) of the set (10).

13. Tyre according to any one of Claims 1 to 12, wherein the sidewall (6) comprises at least one portion (30) protruding with respect to the surface of said sidewall (6), the sidewall (6) comprising at least one complementary sipe (31) delimiting said protruding portion (30).

14. Tyre according to Claim 13, wherein the complementary sipe (31) is formed at the corner edge between the protruding portion (30) and the surface of the sidewall (6).

15. Tyre according to either one of Claims 13 and 14, wherein the complementary sipe (31) has a shape identical to that of the sipes (11) of the set (10).

# Fig. 1

# Fig. 2

# Fig. 3

# Fig. 4

# Fig. 5

# Fig. 6

# Fig. 7

# Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H0986108 B
- JP 2006213128 A
- WO 2015019996 A
- LU 67300